(19)

Europäisches
Patentamt

European
Patent Office

Office européen
des brevets

(11)  **EP 4 184 071 B1**

(12)  **EUROPEAN PATENT SPECIFICATION**

(45) Date of publication and mention
of the grant of the patent:
**07.08.2024   Bulletin 2024/32**

(21) Application number: **22206750.6**

(22) Date of filing: **10.11.2022**

(51) International Patent Classification (IPC):
*F24F 11/00* (2018.01)        *F24F 11/32* (2018.01)
*F24F 11/52* (2018.01)        *F24F 11/523* (2018.01)
*F24F 11/526* (2018.01)        *F24F 110/50* (2018.01)
*F24F 110/66* (2018.01)        *F24F 110/70* (2018.01)

(52) Cooperative Patent Classification (CPC):
**F24F 11/52; F24F 11/0001; F24F 11/32;**
**F24F 11/523; F24F 11/526;** F24F 2110/50;
F24F 2110/66; F24F 2110/70; Y02B 30/70

(54) **METHOD AND SYSTEM FOR AIR QUALITY CONTROL OF AN INDOOR ENVIRONMENT OF A BUILDING**

VERFAHREN UND SYSTEM ZUR REGELUNG DER LUFTQUALITÄT IN EINEM GEBÄUDE

MÉTHODE ET SYSTÈME POUR CONTRÔLER LA QUALITÉ DE L'AIR À L'INTÉRIEUR D'UN IMMEUBLE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority:  **19.11.2021   IT 202100029369**

(43) Date of publication of application:
**24.05.2023   Bulletin 2023/21**

(73) Proprietor: **Fybra S.r.l.**
**20153 Milano (MI) (IT)**

(72) Inventors:
• **Lapenta, Gaetano**
**20153 Milano MI (IT)**
• **Scaramelli, Marco**
**20153 Milano MI (IT)**

(74) Representative: **Perani & Partners S.p.A.**
**Piazza Armando Diaz, 7**
**20123 Milano (IT)**

(56) References cited:
EP-A1- 3 855 087        CN-A- 110 925 946
US-A1- 2021 018 210

**Description**

*Technical field*

The present invention relates to a method and a corresponding system for controlling the air quality in an indoor environment of a building by means of natural ventilation.

*Prior art*

It is known that human respiration involves the inhalation of the oxygen present in the air and the corresponding release of carbon dioxide into the air. In addition, other components which are potentially harmful to humans are released into the environment, such as what is known as VOCs (Volatile Organic Compounds). Therefore, in overcrowded and not properly ventilated indoor environments, there could be a rapid increase in the level of carbon dioxide concentration and a progressive and parallel increase in VOCs. A high carbon dioxide concentration in the air of the indoor environment leads to negative consequences for humans, namely malaise, difficulty in concentration and decreased performance, as well as prolonged exposure to significant VOC values. Furthermore, already for values of carbon dioxide concentration above 800 - 1000ppm, man perceives a sensation of stale air that can significantly compromise his activity. It should be noted that VOCs, unlike CO2, are not exclusively produced by human respiration, so their increase in the environment can be found even in the absence of people, for example in the presence of certain types of furniture or paints.

In order to measure and quantify the air quality of the indoor environment, the use of a carbon dioxide sensor is known in the literature. Such a carbon dioxide sensor is configured to detect an instantaneous value of carbon dioxide concentration in the air of the indoor environment, i.e., to continuously monitor the carbon dioxide concentration of the indoor environment. The instantaneous level of carbon dioxide concentration is then sent to a device for controlling the ventilation of the indoor environment of the building, if present, so as to properly ventilate the indoor environment in the event of an excessive increase in the level of carbon dioxide concentration. The measurement of carbon dioxide concentration is usually used to quantify the amount of carbon dioxide in the environment and if there are no management and control systems of the ventilation of the indoor environment, there will be no impact on the air quality.

A temperature sensor is also known in the prior art, configured to detect an instantaneous value of air temperature of an indoor environment of a building. Traditionally, the measurement made by the temperature sensor is used exclusively to control the heating system of the indoor environment of the building or simply to give the user information about the temperature value.

VOC sensors are also known per se in the prior art.

Documents CN 110925946 and EP 3855087 are further known in the prior art. Such documents describe a method for controlling air quality of an indoor environment of a building comprising the steps of the preamble of claim 1.

*Problem of the prior art*

Disadvantageously, the solutions for monitoring air quality of the prior art, including those made by the same Applicant, are incomplete since they fail to take into account the impact of VOCs in combination with the carbon dioxide concentration, temperature and relative humidity.

*Summary of the invention*

In this context, the technical task underlying the present invention is to provide a method and a system for controlling air quality in an indoor environment of a building which overcome the drawbacks of the prior art.

In particular, it is an object of the present invention to propose a method and a corresponding system which allow to communicate the air quality level in a short time to a user of the indoor environment of the building and which allow to identify, in an adaptive manner, the optimal natural ventilation time in that specific moment, in that specific environment and with those specific conditions.

Furthermore, it is an object of the present invention to propose a method and a corresponding system which also allow the temperature value of the indoor environment to be used to determine the instantaneous and future air quality level.

The mentioned technical task and the specified objects are substantially achieved by a method for controlling the air quality in an indoor environment of a building comprising the steps set out in one or more of the appended claims and a corresponding system comprising the technical features set out in one or more of the appended claims.

BRIEF DESCRIPTION OF THE DRAWINGS

Further features and advantages of the present invention will become clearer from the indicative, and therefore non-limiting, description of a preferred but non-exclusive embodiment of a method and of a system for controlling air quality in an indoor environment of a building, as illustrated in the accompanying drawings in which:

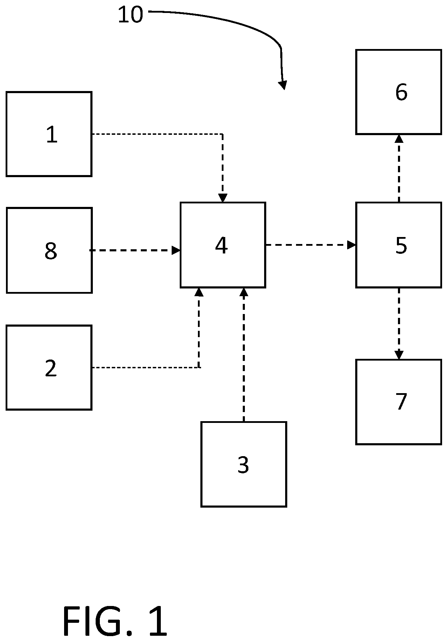

- Figure 1 is a schematic depiction of the system in accordance with the present invention.

DETAILED DESCRIPTION

With particular reference to the accompanying drawing, the number 10 indicates a system for controlling the air quality in an indoor environment of a building. This system 10 comprises a temperature sensor 1 configured to detect an instantaneous value of air temperature in the indoor environment of the building. In other words, the temperature sensor 1 is configured to continuously measure the temperature of the indoor environment of the building. Preferably, such a temperature sensor 1 is provided with a humidity sensor 3 configured to measure the humidity of the air of the indoor environment.

In addition, the system 10 comprises a carbon dioxide sensor 2 configured to detect an instantaneous value of carbon dioxide concentration of the air of the indoor environment of the building. In other words, the carbon dioxide sensor 2 is configured to continuously measure the carbon dioxide concentration of the air of the indoor environment. The carbon dioxide sensor 2 is capable of performing an automatic calibration of the measurement by virtue of a comparison chamber.

The system 10 further comprises a volatile organic compound sensor 8, which is configured to detect an instantaneous value of volatile organic compound concentrations (VOCs) in the air of the indoor environment of the building. In other words, the volatile organic compound sensor 8 is configured to continuously measure the VOC concentration in the air of the indoor environment.

The system 10 comprises a control unit 5 in signal communication with the temperature sensor 1 and/or with the carbon dioxide sensor 2 and/or with the volatile organic compound sensor 8. The system 10 further comprises a communication unit 4 for communicating a signal between the temperature sensor 1 and/or the carbon dioxide sensor 2 and/or the volatile organic compound sensor 8 with the control unit 5.

Furthermore, the system 10 comprises a storage unit 6 in signal communication with the control unit 5.

It should be noted that both the control unit 5 and the storage unit 6 can be local, i.e., placed in a device, not illustrated in the accompanying drawings, also comprising the temperature sensor 1, the carbon dioxide sensor 2, the volatile organic compound sensor 8 and the communication unit 4. Alternatively, both the control unit 5 and the storage unit 6 can be remote, i.e., operating in the cloud.

It is further an object of the present invention a method for controlling the air quality in an indoor environment of a building via the system 10.

The method comprises the step of defining and storing in the storage unit 6 via the control unit 5 control values of carbon dioxide and volatile organic compound concentration.

In particular, the defining and storing step comprises the step of defining and storing in the storage unit 6 an activation value of carbon dioxide concentration. It should be noted that, if the indoor environment is not frequented by people at a given moment, the instantaneous value of carbon dioxide concentration at that given moment is presumably lower than the activation value of carbon dioxide concentration.

A critical activation value of carbon dioxide concentration is also stored in the storage unit 6. Such a critical value of carbon dioxide concentration is higher than the activation value of carbon dioxide. The critical value of carbon dioxide concentration is initially equal to a value considered appropriate for the intended use and the general crowding of the indoor environment. The critical value of carbon dioxide concentration is expressed in ppm. It should be noted that, once the critical value of carbon dioxide concentration in the indoor environment has been exceeded, it is advisable to ventilate such an indoor environment by opening, for example, a window, i.e., performing a natural ventilation operation.

An acceptable value of carbon dioxide concentration is also stored in the storage unit 6 after the critical value of carbon dioxide concentration has been reached and, therefore, an air quality improvement phase, for example, following the natural ventilation. Such an acceptable value of carbon dioxide concentration is less than the critical value of carbon dioxide concentration and is greater than the activation value of carbon dioxide concentration. Preferably, such an acceptable value of carbon dioxide concentration is initially equal to a value considered appropriate in the specific geographical and environmental condition and given the intended use and the typical crowding of the indoor environment. Such an acceptable value of carbon dioxide concentration is expressed in ppm. It should be noted that, once the acceptable value of carbon dioxide concentration in the indoor environment has been reached during a ventilation step of the indoor environment, it is no longer necessary to ventilate such an indoor environment and it is therefore possible, for example, to close the window (action signalled by the restoration of the alert colour/activation).

With regard to volatile organic compounds, the method comprises the step of defining a first critical threshold of volatile organic compound concentration and, in particular, storing it within said storage unit 6.

The method further comprises the step of defining a second critical threshold of volatile organic compound concentration. Such a second critical threshold is in particular a higher value than the first critical threshold.

It is important to emphasize that if the values of carbon dioxide concentration were subject to sudden changes, i.e., a continuous achievement of the critical value of carbon dioxide concentration and subsequent decrease to the acceptable value of carbon dioxide concentration, a continuous and repeated intervention by the user (opening/closing the window) could be generated which would be annoying. It will therefore be necessary to define thresholds which also consider this latency time.

The method further comprises the step of detecting via the carbon dioxide sensor 2 an instantaneous value of carbon dioxide concentration and sending, via the communication unit 4, said instantaneous value of carbon dioxide concentration to the control unit 5.

The method further comprises the step of detecting via the volatile organic compound sensor 8 an instantaneous value of volatile organic compound concentration and sending, via the communication unit 4, such a value to the control unit 5.

It should be noted that the step of detecting an instantaneous value of volatile organic compound concentration is performed when the carbon dioxide concentration is higher than the activation value of carbon dioxide concentration.

Otherwise, i.e., if the carbon dioxide concentration is lower than an activation value of carbon dioxide concentration, the step of detecting an instantaneous value of volatile organic compound concentration is not performed. Accordingly, even if the value of the volatile organic compound concentration is detected by the sensor, it is neglected in the calculation of the parameters indicated below.

Further details regarding the detection of the volatile organic compound concentration will be provided in a later part of the present disclosure.

It should be noted that the sensors 2, 8 are configured to continuously detect the concentration value in the indoor environment and to continuously send such values to the control unit 5.

Subsequently, the method comprises the step of detecting, via the temperature sensor 1, an instantaneous value of air temperature of the indoor environment and sending, via the communication unit 4, said instantaneous value of temperature to the control unit 5. It should be noted that the temperature sensor 1 is configured to continuously detect the air temperature value of the indoor environment and to continuously send such a temperature value to the control unit 5.

The method comprises the step of defining, via the control unit 5, a refresh time interval comprising a plurality of time points. Preferably, said refresh time interval corresponds to the time period between two successive ventilations of the indoor environment of the building.

The method further comprises the step of storing in the storage unit 6, via the control unit 5, an instantaneous value of temperature for each time point of the refresh time interval to define a set of instantaneous values of temperature.

Next, the method comprises the step of storing in the storage unit 6, via the control unit 5, an instantaneous value of carbon dioxide concentration for each time point of the refresh time interval to define a set of instantaneous values of carbon dioxide concentration.

According to the preferred embodiment, the method comprises the step of defining, via the control unit 5, a reference value of temperature. For example, such a reference value of temperature is 18°C. Alternatively, the reference value of temperature can be different, in particular it can vary as a function of the user's needs, geographical location and climate. For example, during the summer season in a temperate climate the reference value of temperature can be 26°C.

The method further comprises the step of analysing, via the control unit 5, the set of instantaneous values of temperature to define a maximum value of temperature between the instantaneous values of temperature and the step of analysing, via the control unit 5, the set of instantaneous values of temperature to define a rate of decrease of temperature.

The method further comprises the step of defining, by means of the control unit 5, a maximum air purification time interval as a function of the maximum value of temperature, the reference value of temperature and the rate of decrease of temperature. The maximum purification time interval represents a maximum ventilation time of the indoor environment so as not to fall below the reference value of temperature. Preferably, the first maximum air purification time interval is defined by the control unit 5 in accordance with the following expression:

$$tmax[min] = \frac{Tmax - Tref}{vT^-}$$

Where:

tmax: maximum air purification time interval;

Tmax: maximum value of temperature;

Tref: reference value of temperature;

$vT^-$ = rate of decrease of temperature.

With reference to the detection of the volatile organic compounds, the method according to the invention envisages that, if the time elapsed since the last ventilation of the environment is greater than the maximum air purification time interval and the volatile organic compound concentration is greater than the first critical threshold, an output signal indicative of the need to ventilate the environment is sent.

Furthermore, if the time since the last ventilation of the environment is less than the maximum air purification time interval and the volatile organic compound concentration is greater than the second critical threshold, an output signal indicative of the need to ventilate the environment is likewise sent.

In accordance with the preferred embodiment of the invention, the method comprises the step of defining, via the control unit 5, a reference time interval and a comfort value of carbon dioxide concentration of the air of the indoor environment of the building. Such a reference time interval represents a minimum time interval which must pass for ventilation of the indoor environment. It should be noted that such a reference time interval is set as an initial value at 10 min, but that this value can vary depending on the customer, the season and the specific conditions of the indoor environment. The comfort value of carbon dioxide concentration represents a value of carbon dioxide concentration of the air of the indoor environment such as to not affect the performance and concentration of a user of the indoor environment.

In addition, the method further comprises the step of analysing, via the control unit 5, the set of instantaneous values of carbon dioxide concentration to define a rate of increase of carbon dioxide concentration.

The method further comprises the step of calculating, via the control unit 5, an effective time interval as a function of the critical value of carbon dioxide concentration, the acceptable value of carbon dioxide concentration and the rate of increase of carbon dioxide concentration. Preferably, the actual time interval is calculated via the control unit in accordance with the following expression:

$$tblumax[min] = \frac{Va - Vc}{vCO2^+}$$

Where:

tblumax [min]: actual time interval;

Va: critical value of carbon dioxide concentration;

Vc: acceptable value of carbon dioxide concentration;

$vCO2^+$ = rate of increase of carbon dioxide concentration.

It should be noted that if the rate of increase of the carbon dioxide concentration is zero, such an actual time interval is set, via the control unit 5, to a high value such as, for example, 30 min.

After the step of calculating the actual time interval, the method comprises the step of comparing, via the control unit 5, the actual time interval with the reference time interval.

After the step of comparing the actual time interval with the reference time interval, the method comprises the step of updating, via the control unit 5, the acceptable value of carbon dioxide concentration as a function of the comfort value of carbon dioxide concentration, the reference time interval, the actual time interval and the rate of increase of carbon dioxide concentration, if the actual time interval is less than the reference time interval. Preferably, the acceptable value of carbon dioxide concentration is updated, via the control unit 5, in accordance with the following expression:

$$Vcnew = CO2c - \frac{tref - tblumax}{vCO2^+}$$

Vcnew: acceptable value of carbon dioxide concentration after updating via the control unit 5;

CO2c: comfort value of carbon dioxide concentration;

tref: reference time interval;

tblumax: actual time interval;

$vCO2^+$: rate of increase of carbon dioxide concentration.

The acceptable value of carbon dioxide concentration after the updating is stored in the storage unit 6 in place of the previous acceptable value of carbon dioxide concentration.

If, instead, the actual time interval is greater than or equal to the reference time interval, the acceptable value of carbon dioxide concentration is not updated by the control unit 5, i.e., it remains equal to the acceptable value of carbon dioxide concentration stored in the storage unit 6.

In accordance with the preferred embodiment of the invention, the method comprises, after the step of updating the acceptable value of carbon dioxide concentration and before step c), the step of defining, via the control unit 5, a value of carbon dioxide concentration outside the building. Preferably, such a value of carbon dioxide concentration is measured via a carbon dioxide concentration detection device located outside the building.

After the step of defining an external value of carbon dioxide concentration, the method comprises the step of comparing, via the control unit 5, the acceptable value of carbon dioxide concentration with the external value of carbon dioxide concentration.

After the step of comparing, via the control unit 5, the acceptable value of carbon dioxide concentration with the external value of carbon dioxide concentration, the method comprises the step of updating, via the control unit 5, the acceptable value of carbon dioxide concentration as a function of the external value of carbon dioxide concentration, if the acceptable value of carbon dioxide concentration exceeds the external value of carbon dioxide concentration by a value equal to a specific value of carbon dioxide concentration, preferably 200ppm. Preferably, the acceptable value of carbon dioxide concentration is updated, via the control unit 5, in accordance with the following expression:

$$Vcnew = Ve + 200$$

Vcnew: acceptable value of carbon dioxide concentration after updating via control unit 5;
Ve: external value of carbon dioxide concentration.

Still after the step of comparing, via the control unit 5, the acceptable value of carbon dioxide concentration with the external value of carbon dioxide concentration, the method comprises the step of updating, via the control unit 5, the critical value of carbon dioxide concentration as a function of the critical value of carbon dioxide concentration stored in the storage unit 6, the reference time interval, the external value of carbon dioxide concentration and the rate of increase of carbon dioxide concentration, if the acceptable value of carbon dioxide concentration exceeds the external value of carbon dioxide concentration by a value equal to the specific value of carbon dioxide concentration. Preferably, the critical value of carbon dioxide concentration is updated, via the control unit 5, in accordance with the following expression:

$$Vanew = Va + \frac{tref - (Va - (Ve + 200))}{vCO2^+}$$

Where:

Vanew: critical value of carbon dioxide concentration after updating via the control unit 5;
tref: reference time interval;
Va: critical value of carbon dioxide concentration stored in the storage unit 6;
Ve: external value of carbon dioxide concentration;
$vCO2^+$: rate of increase of carbon dioxide concentration.

The acceptable value of carbon dioxide concentration and the critical value of carbon dioxide concentration after the update are stored in the storage unit 6 in place of the previous acceptable value of carbon dioxide concentration and the previous critical value of carbon dioxide concentration, respectively.

If, instead, the acceptable value of carbon dioxide concentration does not exceed the external value of carbon dioxide concentration by a value equal to the specific value of carbon dioxide concentration, the acceptable value of carbon dioxide concentration and the critical value of carbon dioxide concentration are not updated by the control unit, i.e., they remain equal, respectively, to the acceptable value of carbon dioxide concentration and the critical value of carbon dioxide concentration stored in the storage unit 6.

In accordance with the preferred embodiment of the invention, the method comprises, after the step of updating the critical and acceptable values of carbon dioxide concentration and prior to step c), the further step of defining, via the control unit 5, an air purification time interval as a function of the critical value of carbon dioxide concentration, the acceptable value of carbon dioxide concentration and the rate of decrease of carbon dioxide concentration. Such an air purification time interval represents the period of time necessary to ventilate the indoor environment considering the acceptable value and the critical value of carbon dioxide concentration updated via the control unit 5. Preferably, the air purification time interval is defined by the control unit 5 in accordance with the following expression:

$$ta = \frac{Vanew - Vcnew}{vCO2^-}$$

ta: air purification time interval;
Vanew = critical value of carbon dioxide concentration after updating via the control unit 5;
Vcnew = acceptable value of carbon dioxide concentration after updating via the control unit 5;
vCO2$^-$ = rate of decrease of carbon dioxide concentration.

After the step of defining, via the control unit 5, an air purification time interval, the method comprises the step of defining, via the control unit 5, a minimum temperature value which can be reached as a function of the maximum temperature value, the purification time interval and the rate of decrease of temperature. Preferably, the minimum reachable temperature value is defined via the control unit 5 in accordance with the following expression:

$$Tmin\ period = Tmax - (ta * vT-)$$

Where:

Tmin period = minimum reachable temperature value;
Tmax = maximum temperature value of the set of instantaneous values of temperature;
ta= air purification time interval;
vT$^-$ = rate of decrease of temperature;

After the step of defining, via the control unit 5, a minimum reachable temperature value, the method comprises the step of comparing, via the control unit 5, the minimum reachable temperature value with the reference value of temperature.
After the step of comparing, via the control unit 5, the minimum reachable temperature value with the reference value of temperature, the method comprises the step of updating, via the control unit 5, the acceptable value of carbon dioxide concentration as a function of the critical value of carbon dioxide concentration, the air purification time interval and the rate of decrease of carbon dioxide concentration, if the minimum reachable temperature value is less than the reference value of temperature. Preferably, the acceptable value of carbon dioxide concentration is updated via the control unit 5 in accordance with the following expression:

$$Vcnew = Vanew - (ta - 1) * vCO2^-$$

Where:

Vcnew: acceptable value of carbon dioxide concentration after updating via the control unit 5;
Vanew: critical value of carbon dioxide concentration;
ta: air purification time interval;
vCO2$^-$: rate of decrease of carbon dioxide concentration.

The acceptable value of carbon dioxide concentration after the updating is stored in the storage unit 6 in place of the previous acceptable value of carbon dioxide concentration stored in the storage unit 6.
If, instead, the minimum reachable temperature value is greater than or equal to the reference value of temperature, the acceptable value of carbon dioxide concentration is not updated, i.e., it remains equal to the acceptable value of carbon dioxide concentration stored in the storage unit 6.
It should be noted that, by updating the acceptable and critical values of carbon dioxide concentration according to the instantaneous values of temperature and carbon dioxide concentration detected, a preliminary calibration step is not necessary according to the specific features of the indoor environment. In other words, the method does not require a calibration step based on the dimensional parameters of the indoor environment, the number and dimensions of the ventilation sources (doors and windows) and the number of people attending such an indoor environment. In essence, the update of the acceptable and critical values of carbon dioxide concentration allows, independently of the specific features of the indoor environment, to communicate to the users the air quality level of the indoor environment, whether it is necessary to ventilate the indoor environment and for how long it is necessary to ventilate such an indoor environment, also indicating in real time the actual effectiveness of the ventilation applied. All in compliance with the principles of comfort and energy efficiency.

Next, the method comprises the step of processing via the control unit 5 the control values and the instantaneous concentration values to generate an output signal representative of the processing performed by the control unit 5. In other words, the output signal generated by the control unit 5 is representative of an instantaneous level of air quality of the indoor environment. It should be noted that, the control unit 5 is configured to continuously process the control values and the instantaneous concentration values to generate the output signal. Such an output signal can change depending on the instantaneous air quality level of the indoor environment, i.e., depending on the instantaneous values of carbon dioxide and volatile organic compound concentration.

Also in accordance with the preferred embodiment of the invention, the processing step comprises a sub-step of comparing the instantaneous value of carbon dioxide concentration with the activation value of carbon dioxide concentration, with the critical value of carbon dioxide concentration and with the acceptable value of carbon dioxide concentration.

The output signal is representative of a first alert as long as the instantaneous value of carbon dioxide concentration is lower than the activation value of carbon dioxide concentration. The first alert is representative of a first level of air quality of the indoor environment. As long as the output signal is representative of the first level of air quality of the indoor environment it means, presumably, that there is no person in the indoor environment.

The output signal is representative of a second alert as long as the instantaneous value carbon dioxide concentration is higher than the activation value of carbon dioxide concentration and is lower than the critical value of carbon dioxide concentration. Such a second alert is representative of a second level of air quality of the indoor environment. If the output signal is representative of the second level of air quality, it is not necessary to ventilate the indoor environment.

The output signal is representative of a third alert as long as the instantaneous value of carbon dioxide concentration is higher than the critical value of carbon dioxide concentration and the instantaneous value of carbon dioxide concentration remains constant or increasing over time. Such a third alert is representative of a third level of air quality of the indoor environment. If the output signal is representative of the third level of air quality, the user of the indoor environment knows that it is necessary to ventilate such an indoor environment, for example by opening a window.

The output signal is representative of a fourth alert after the instantaneous value of carbon dioxide concentration has exceeded the critical value of carbon dioxide concentration and as long as the instantaneous value of carbon dioxide concentration decreases with time and is higher than the acceptable value of carbon dioxide concentration. Such a fourth alert is representative of a fourth level of air quality of the indoor environment. If the output signal is representative of the fourth alert, it means that the user is ventilating the indoor environment, for example by opening a window, i.e., the air quality of the indoor environment is improving. Furthermore, as long as the output signal is representative of the fourth level of air quality, the user understands that it is necessary to continue to ventilate the indoor environment. Consequently, the user can understand how long it is necessary to ventilate the indoor environment in those specific conditions, i.e., in that time point, with that number of people in the indoor environment and those determined conditions of use.

After a ventilation step, i.e., when the instantaneous value of carbon dioxide concentration falls below the acceptable value of carbon dioxide concentration and remains higher than the activation value of carbon dioxide, the output signal is again representative of the second alert.

It should therefore be emphasized that the time in which it is necessary to ventilate the indoor environment is the time elapsing between the point in which the output signal is representative of the fourth alert and the point in which the output signal returns to be representative of the second alert.

It should also be noted that the output signal is configured to carry the first, second, third, and fourth alerts, respectively.

Still in accordance with the preferred embodiment of the invention, the processing step comprises defining, via the control unit 5, a critical time interval corresponding to the time period in which the output signal is representative of the fourth alert. In other words, the critical time interval is the time period in which the indoor environment must be ventilated.

After the processing step, the method comprises the step of sending, via the control unit 5, the output signal to a visual and/or acoustic warning unit 7. Preferably, such a warning unit 7 is placed inside the indoor environment in a position easily consultable by a user of the indoor environment. The output signal generated by the control unit 5 controls the visual and/or acoustic warning unit 7. Such a warning unit 7 changes its warning state based on the output signal. Accordingly, the user of the indoor environment, by controlling the warning state of the warning unit 7 is able to deduce the instantaneous level of air quality of the indoor environment.

According to a first embodiment of the invention, the sending step comprises the step of sending the output signal from the control unit (5) to a light source. The first, second, third and fourth alerts respectively correspond to a first, second, third and fourth colour and/or light intensity emitted by the light source. For example, the first alert corresponds to a shade of white, the second alert corresponds to a shade of cyan, the third alert corresponds to a shade of red, while the fourth alert corresponds to a shade of fuchsia, preferably flashing fuchsia. It should therefore be noted that the user, by controlling the light colour emitted by the light source, is capable of immediately checking the air quality of the indoor environment. In fact, in accordance with what has been previously introduced, if the colour emitted by the light source is white or cyan, the user understands that it is not necessary to ventilate the indoor environment, while if the colour emitted by the source is red, the user understands that it is necessary to ventilate the indoor environment and, following the flashing of the fuchsia light, perceives how long it is necessary to ventilate the indoor environment until the cyan colour is restored.

In accordance with a second alternative embodiment and/or combinable with the first embodiment of the invention, the sending step comprises the step of sending the output signal from the control unit 5 to a sound source. The first, second, third and fourth alerts correspond to a first, second, third and fourth pitch and/or sound intensity, respectively. Preferably:

- the output signal carrying the second alert is sent to the sound source upon switching from the first to the second alert and/or upon switching from the fourth to the second alert;
- the output signal carrying the third alert is sent to the sound source upon switching from the second to the third alert;
- the output signal carrying the fourth alert is sent to the sound source upon switching from the third to the fourth alert;
- the output signal carrying the first alert is sent to the sound source upon switching from the second alert to the first alert.

Alternatively, each sound output signal can be issued as a voice message.

In addition, the step of sending the output signal comprises the step of comparing, via the control unit 5, the critical time interval with the maximum air purification time interval.

The step of sending the output signal also comprises the step of setting the output signal on the second alert if the critical time interval exceeds the maximum air purification time interval. In other words, regardless of the result of the comparison between the instantaneous value of carbon dioxide concentration and the critical and acceptable values of carbon dioxide concentration, if the critical time interval exceeds the maximum air purification time interval, the output signal carries the second alert, i.e., it is no longer necessary to ventilate the indoor environment.

## Claims

1. A method of controlling air quality in an indoor environment of a building by a system (10) that comprises a carbon dioxide sensor (2) configured to detect an instantaneous value of carbon dioxide concentration in the air of the indoor environment of the building, a volatile organic compound sensor (8) configured to detect an instantaneous value of volatile organic compounds in the air of the indoor environment of the building, a control unit (5) in signal communication with the carbon dioxide sensor (2) and with the volatile organic compound sensor (8), a communication unit (4) for establishing signal communication between the carbon dioxide sensor (2) and the volatile organic compound sensor (8) on the one hand and the control unit (5) on the other hand, a storage unit (6) in signal communication with the control unit (5), the method comprising the steps of:

   - storing control values of carbon dioxide concentration and/or volatile organic compounds in the storage unit (6);
   - detecting, by the carbon dioxide sensor (2), an instantaneous value of carbon dioxide concentration and sending it to the control unit (5),
   - detecting by the volatile organic compound sensor (8) an instantaneous value of volatile organic compound concentration and sending it to the control unit (5);
   - processing, by the control unit (5), the control values and the instantaneous values of carbon dioxide and volatile organic compound concentration to generate an output signal representative of the air quality detected by the sensors (2, 8);
   - sending the output signal to a visual and/or acoustic warning unit (7).

   **characterized in that** it comprises the additional steps of:

   - defining a maximum air purification time interval corresponding to the maximum duration of an environment ventilation step;
   - defining a first critical threshold for volatile organic compound concentration;
   - defining a second critical threshold for volatile organic compound concentration whose value is higher than the first critical threshold;

- determining, when volatile organic compound detection is being performed, whether the time elapsed since the last environment ventilation is more than the maximum air purification time interval and volatile organic compound concentration is higher than the first critical threshold, and when this is determined to be so, sending an output signal indicative of the need to perform environment ventilation.

2. A method as claimed in the preceding claim, **characterized in that** when volatile organic compound detection is being performed, if the time elapsed since the last environment ventilation is less than the maximum air purification time interval and the concentration of volatile organic compounds is higher than the second critical threshold, an output signal is sent, indicating the need to perform environment ventilation.

3. A method as claimed in any of the preceding claims, **characterized in that** the step of detecting an instantaneous value of volatile organic compound concentration is carried out when carbon dioxide concentration is higher than an activation value of carbon dioxide concentration.

4. A method as claimed in any of the preceding claims, **characterized in that** the step of detecting an instantaneous value of volatile organic compound concentration is not carried out when carbon dioxide concentration is lower than an activation value of carbon dioxide concentration.

5. A method as claimed in any of the preceding claims, **characterized in that** the step of storing control values of carbon dioxide and/or volatile organic compounds concentration in the storage unit (6) comprises the steps of:

   - storing in the storage unit (6) said activation value of carbon dioxide concentration;
   - storing in the storage unit (6) a critical value of carbon dioxide concentration; said critical value of carbon dioxide concentration being greater than said activation value of carbon dioxide;
   - storing in the storage unit (6) an acceptable value of carbon dioxide concentration, said acceptable value of concentration being smaller than the critical value of carbon dioxide concentration and greater than the activation value of carbon dioxide concentration.

6. A method as claimed in the preceding claim, **characterized in that** step of processing comprises the step of comparing the instantaneous value of carbon dioxide concentration with the activation value of carbon dioxide concentration, with the critical value of carbon dioxide concentration and with the acceptable value of carbon dioxide concentration; wherein

   - the output signal is representative of a first alert as long as the instantaneous value of carbon dioxide concentration is lower than the activation value of carbon dioxide concentration;
   - the output signal is representative of a second alert as long as the instantaneous value of carbon dioxide concentration value is higher than the activation value of carbon dioxide concentration and is lower than the critical value of carbon dioxide concentration;
   - the output signal is representative of a third alert as long as the instantaneous value of carbon dioxide concentration is higher than the critical value of carbon dioxide concentration and said instantaneous value of carbon dioxide concentration remains constant or increases with time;
   - the output signal is representative of a fourth alert once the instantaneous value of carbon dioxide concentration has exceeded the critical value of carbon dioxide concentration and as long as the instantaneous value of carbon dioxide concentration decreases with time and is higher than the acceptable value of carbon dioxide concentration.

7. A method as claimed in the preceding claim, **characterized in that** the system further comprises a temperature sensor (1) configured to detect an instantaneous value of air temperature in the indoor environment, said temperature sensor (1) being in signal communication with the control unit (5) via the communication unit (4), said method comprising the additional steps of:

   - detecting, by the temperature sensor (1), an instantaneous value of air temperature in the indoor environment and sending, by the communication unit (4) said instantaneous value of temperature to the control unit (5);
   - defining, by the control unit, a refresh time interval comprising a plurality of time points;
   - storing in the storage unit (6), by the control unit (5), an instantaneous value of temperature for each time point of the refresh time interval to define a set of instantaneous values of temperature;
   - storing in the storage unit (6), by the control unit, an instantaneous value of carbon dioxide concentration for each time point of the refresh time interval to define a set of instantaneous values of carbon dioxide concentration.

8. A method as claimed in preceding claim, **characterized in that** it comprises the additional steps of:

- defining, by the control unit (5), a reference value of temperature;
- analyzing, by the control unit (5), the set of instantaneous values of temperature to determine a maximum value of temperature from said instantaneous values of temperature;
- analyzing, by the control unit (5), the set of instantaneous values of temperature to determine a rate of decrease of temperature;
- defining, by the control unit (5), said maximum air purification time interval according to the maximum value of temperature, the reference value of temperature and the rate of decrease of temperature;

and the step of processing comprises the sub-steps of:

- defining, by the control unit (5), a critical time interval corresponding to the period of time in which the output signal is representative of the fourth alert;
- comparing, by the control unit (5), the critical time interval with the maximum air purification time interval;
- setting the output signal to the second alert if the critical time interval exceeds the maximum air purification time interval.

9. A method as claimed in any of the preceding claims, **characterized in that** the step of sending an output signal comprises the sub-step of sending the output signal from the control unit (5) to a light source, the first, second, third and fourth alerts corresponding to a first, a second, a third and a fourth light colors and/or intensities that can be emitted from the light source respectively.

10. A method as claimed in any of the preceding claims, wherein the step of sending an output signal comprises the sub-step of sending the output signal from the control unit (5) to a sound source, the first, second, third and fourth alerts corresponding to a first, a second, a third and a fourth sound tones and/or intensities and/or to a first and/or a second and/or a third and/or a fourth voice message.

11. A system (10) configured to carry out the method according to any one of the preceding claims, said system (10) comprising:

- a temperature sensor (1) configured to detect an instantaneous value of temperature of air in the indoor environment of the building;
- a carbon dioxide sensor (2) configured to detect an instantaneous value of carbon dioxide concentration of air in the indoor environment of the building;
- a volatile organic compound sensor (8) configured to detect an instantaneous value of volatile organic compound concentration of air in the indoor environment of the building;
- a control unit (5) in signal communication with the temperature sensor (1) and with the carbon dioxide sensor (2);
- a communication unit (4) for establishing signal communication between the temperature, carbon dioxide and volatile organic compound sensors on the one hand and the control unit (5) on the other hand, said communication unit (4) being configured to send instantaneous values of temperature, carbon dioxide and volatile organic compounds to the control unit (5);
- a storage unit (6) in signal communication with the control unit (5) and configured to store control values of carbon dioxide and volatile organic compound concentration;

wherein the control unit (5) is configured to process the control values and the instantaneous values of carbon dioxide and volatile organic compound concentration to generate an output signal representative of the air quality detected by the sensors (2, 8) and to send the output signal to a visual and/or acoustic warning unit (7).

**Patentansprüche**

1. Verfahren zum Steuern der Luftqualität in einer Innenumgebung eines Gebäudes durch ein System (10), umfassend einen Kohlendioxidsensor (2), der konfiguriert ist, um einen Momentanwert der Kohlendioxidkonzentration in der Luft der Innenumgebung des Gebäudes zu erfassen, einen Sensor flüchtiger organischer Verbindungen (8), der konfiguriert ist, um einen Momentanwert flüchtiger organischer Verbindungen in der Luft der Innenumgebung des Gebäudes zu erfassen, eine Steuereinheit (5) in Signalverbindung mit dem Kohlendioxidsensor (2) und mit dem Sensor flüchtiger organischer Verbindungen (8) steht, eine Kommunikationseinheit (4) zum Erstellen eines Kommunikationssignals zwischen dem Kohlendioxidsensor (2) und dem Sensor flüchtiger organischer Verbindungen (8) einerseits und der Steuereinheit (5) andererseits, eine Speichereinheit (6) in Signalverbindung mit der Steuereinheit (5), das Verfahren die folgenden Schritte:

- Speichern von Kontrollwerten von Kohlendioxidkonzentration und/oder flüchtiger organischer Verbindungen in der Speichereinheit (6);
- Erfassen durch den Kohlendioxidsensor (2), eines Momentanwerts von Kohlendioxidkonzentration und Senden desselben an die Steuereinheit (5),
- Erfassen, durch den Sensor flüchtiger organischer Verbindungen (8), eines Momentanwerts der Konzentration flüchtiger organischer Verbindungen und Senden desselben an die Steuereinheit (5);
- Verarbeiten, durch die Steuereinheit (5), der Steuerwerte und der Momentanwerte von Kohlendioxid und der Konzentration flüchtiger organischer Verbindungen, um ein Ausgangssignal zu erzeugen, das repräsentativ für die Luftqualität ist, die von den Sensoren (2, 8) erfasst wird;
- Senden des Ausgangssignals an eine optische und/oder akustische Warneinheit (7), **dadurch gekennzeichnet, dass** es die folgenden zusätzlichen Schritte umfasst:
- Definieren eines maximalen Luftreinigungszeitintervalls, das der maximalen Dauer eines Umgebungsbelüftungsschritts entspricht;
- Definieren eines ersten kritischen Schwellenwerts für die Konzentration flüchtiger organischer Verbindungen;
- Definieren eines zweiten kritischen Schwellenwerts für die Konzentration flüchtiger organischer Verbindungen, dessen Wert höher ist als der erste kritische Schwellenwert;
- Bestimmen, wenn die Erfassung flüchtiger organischer Verbindungen durchgeführt wird, ob die seit der letzten Umgebungsbelüftung verstrichene Zeit größer ist als das maximale Luftreinigungszeitintervall und die Konzentration der flüchtigen organischen Verbindung höher ist als der erste kritische Schwellenwert, und wenn bestimmt wird, dass dies der Fall ist, Senden eines Ausgangssignals, das indikativ für die Notwendigkeit ist, eine Umgebungsbelüftung durchzuführen.

2. Verfahren nach dem vorherigen Anspruch, **dadurch gekennzeichnet, dass**, wenn die Erfassung flüchtiger organischer Verbindungen durchgeführt wird, wenn die seit der letzten Umgebungsbelüftung verstrichene Zeit kleiner ist als das maximale Luftreinigungszeitintervall ist und die Konzentration flüchtiger organischer Verbindungen höher ist als der zweite kritische Schwellenwert, ein Ausgangssignal gesendet wird, das die Notwendigkeit zum Durchführen einer Umgebungsbelüftung angibt.

3. Verfahren nach einem der vorherigen Ansprüche, **dadurch gekennzeichnet, dass** der Schritt eines Erfassens eines Momentanwerts der Konzentration der flüchtigen organischen Verbindung durchgeführt wird, wenn die Kohlendioxidkonzentration höher ist als ein Aktivierungswert der Kohlendioxidkonzentration.

4. Verfahren nach einem der vorherigen Ansprüche, **dadurch gekennzeichnet, dass** der Schritt eines Erfassens eines Momentanwerts der Konzentration der flüchtigen organischen Verbindung nicht durchgeführt wird, wenn die Kohlendioxidkonzentration niedriger ist als ein Aktivierungswert der Kohlendioxidkonzentration.

5. Verfahren nach einem der vorherigen Ansprüche, **dadurch gekennzeichnet, dass** der Schritt eines Speicherns der Kontrollwerte der Konzentration von Kohlendioxid und/oder flüchtigen organischen Verbindungen in der Speichereinheit (6) die folgenden Schritte umfasst:

- Speichern, in der Speichereinheit (6), des Aktivierungswerts der Kohlendioxidkonzentration;
- Speichern, in der Speichereinheit (6), eines kritischen Werts der Kohlendioxidkonzentration; wobei der kritische Wert der Kohlendioxidkonzentration größer ist als der Aktivierungswert von Kohlendioxid;
- Speichern, in der Speichereinheit (6), eines annehmbaren Werts der Kohlendioxidkonzentration, wobei der annehmbare Wert der Konzentration kleiner als der kritische Wert der Kohlendioxidkonzentration und größer als der Aktivierungswert der Kohlendioxidkonzentration ist.

6. Verfahren nach dem vorherigen Anspruch, **dadurch gekennzeichnet, dass** der Schritt eines Verarbeitens den Schritt eines Vergleichens des Momentanwerts der Kohlendioxidkonzentration mit dem Aktivierungswert der Kohlendioxidkonzentration, mit dem kritischen Wert der Kohlendioxidkonzentration und mit dem annehmbaren Wert der Kohlendioxidkonzentration umfasst; wobei

- das Ausgangssignal repräsentativ für einen ersten Alarm ist, solange der Momentanwert der Kohlendioxidkonzentration niedriger ist als der Aktivierungswert der Kohlendioxidkonzentration ist;
- das Ausgangssignal repräsentativ für einen zweiten Alarm ist, solange der Momentanwert des Kohlendioxidkonzentrationswert höher als der Aktivierungswert der Kohlendioxidkonzentration und niedriger als der kritische Wert der Kohlendioxidkonzentration ist;
- das Ausgangssignal repräsentativ für einen dritten Alarm ist, solange der Momentanwert der Kohlendioxidkonzentration höher ist als der kritische Wert der Kohlendioxidkonzentration und der Momentanwert der Kohlendioxidkonzentration konstant bleibt oder mit der Zeit zunimmt;
- das Ausgangssignal repräsentativ für einen vierten Alarm ist, sobald der Momentanwert der Kohlendioxidkonzentration den kritischen Wert der Kohlendioxidkonzentration überschritten hat und solange der Momentanwert der Kohlendioxidkonzentration mit der Zeit abnimmt und höher ist als der annehmbare Wert der Kohlendioxidkonzentration.

**7.** Verfahren nach dem vorherigen Anspruch, **dadurch gekennzeichnet, dass** das System ferner einen Temperatursensor (1) umfasst, der konfiguriert ist, um einen Momentanwert der Lufttemperatur in der Innenumgebung zu erfassen, wobei der Temperatursensor (1) über die Kommunikationseinheit (4) in Signalverbindung mit der Steuereinheit (5) ist, das Verfahren umfassend die folgenden zusätzlichen Schritte:

- Erfassen, durch den Temperatursensor (1), eines Momentanwerts der Lufttemperatur in der Innenumgebung und Senden, durch die Kommunikationseinheit (4), des Momentanwerts der Temperatur an die Steuereinheit (5);
- Definieren, durch die Steuereinheit, eines Aktualisierungszeitintervalls, umfassend eine Vielzahl von Zeitpunkten;
- Speichern, durch die Steuereinheit (5), eines Momentanwerts der Temperatur für jeden Zeitpunkt des Aktualisierungszeitintervalls in der Speichereinheit (6), um einen Satz von momentanen Temperaturwerten zu definieren;

- Speichern, in der Speichereinheit (6), eines momentanen Werts der Kohlendioxidkonzentration für jeden Zeitpunkt des Aktualisierungszeitintervalls, um einen Satz von Momentanwerten der Kohlendioxidkonzentration zu definieren.

**8.** Verfahren nach dem vorherigen Anspruch, **dadurch gekennzeichnet, dass** es die folgenden zusätzlichen Schritte umfasst:

- Definieren, durch die Steuereinheit (5), eines Temperaturreferenzwerts;
- Analysieren, durch die Steuereinheit (5), des Satzes von momentanen Temperaturwerten, um einen Temperaturhöchstwert aus den momentanen Temperaturwerten zu bestimmen;
- Analysieren, durch die Steuereinheit (5), des Satzes von momentanen Temperaturwerten, um eine Verringerungsrate der Temperatur zu bestimmen;
- Definieren, durch die Steuereinheit (5), des maximalen Luftreinigungszeitintervalls gemäß dem Temperaturhöchstwert, dem Temperaturreferenzwert und der Verringerungsrate der Temperatur;

und wobei der Schritt eines Verarbeitens die folgenden Teilschritte umfasst:

- Definieren, durch die Steuereinheit (5), eines kritischen Zeitintervalls, das dem Zeitraum entspricht, in dem das Ausgangssignal repräsentativ für den vierten Alarm ist;
- Vergleichen, durch die Steuereinheit (5), des kritischen Zeitintervalls mit dem maximalen Luftreinigungszeitintervall;
- Setzen des Ausgangssignals auf den zweiten Alarm, wenn das kritische Zeitintervall das maximale Luftreinigungszeitintervall überschreitet.

**9.** Verfahren nach einem der vorherigen Ansprüche, **dadurch gekennzeichnet, dass** der Schritt eines Sendens eines Ausgangssignals den Teilschritt eines Sendens des Ausgangssignals von der Steuereinheit (5) an eine Lichtquelle umfasst, wobei der erste, der zweite, der dritte und der vierte Alarm einer ersten, einer zweiten, einer dritten und einer vierten Lichtfarbe und/oder Intensität entsprechen, die jeweils von der Lichtquelle emittiert werden kann.

**10.** Verfahren nach einem der vorherigen Ansprüche, wobei der Schritt eines Sendens eines Ausgangssignals den Teilschritt eines Sendens des Ausgangssignals von der Steuereinheit (5) an eine Schallquelle umfasst, wobei der erste, der zweite, der dritte und der vierte Alarm einem ersten, einem zweiten, einem dritten und einem vierten Klangton und/oder -intensität und/oder einer ersten und/oder einer zweiten und/oder einer dritten und/oder einer vierten Sprachnachricht entsprechen.

**11.** System (10), das konfiguriert ist, um das Verfahren nach einem der vorherigen Ansprüche auszuführen, das System (10) umfassend:

- einen Temperatursensor (1), der konfiguriert ist, um einen momentanen Temperaturwert der Luft in der Innenumgebung des Gebäudes zu erfassen;
- einen Kohlendioxidsensor (2), der konfiguriert ist, um einen Kohlendioxidkonzentration-Momentanwert der Luft in der Innenumgebung des Gebäudes zu erfassen;
- einen Sensor flüchtiger organischer Verbindungen (8), der konfiguriert ist, um einen Momentanwert einer Konzentration flüchtiger organischer Verbindungen von Luft in der Innenumgebung des Gebäudes zu erfassen;
- eine Steuereinheit (5) in Signalverbindung mit dem Temperatursensor (1) und mit dem Kohlendioxidsensor (2);
- eine Kommunikationseinheit (4) zum Herstellen einer Signalverbindung zwischen dem Temperatur-, Kohlendioxidsensor und Sensor flüchtiger organischer Verbindungen einerseits und der Steuereinheit (5) andererseits, wobei die Kommunikationseinheit (4) konfiguriert ist, um Momentanwerte von Temperatur, Kohlendioxid und flüchtigen organischen Verbindungen an die Steuereinheit (5) zu senden;
- eine Speichereinheit (6) in Signalverbindung mit der Steuereinheit (5) und die konfiguriert ist, um Kontrollwerte für Kohlendioxid und die Konzentration flüchtiger organischer Verbindungen zu speichern;

wobei die Steuereinheit (5) konfiguriert ist, um die Steuerwerte und die Momentanwerte von Kohlendioxid und der Konzentration flüchtiger organischer Verbindungen zu verarbeiten, um ein Ausgangssignal zu erzeugen, das repräsentativ für die von den Sensoren (2, 8) erfasste Luftqualität ist, und um das Ausgangssignal an eine optische und/oder akustische Warneinheit (7) zu senden.

## Revendications

**1.** Procédé de contrôle de la qualité de l'air dans un environnement intérieur d'un bâtiment par un système (10) qui comprend un capteur de dioxyde de carbone (2) configuré pour détecter une valeur instantanée de concentration en dioxyde de carbone dans l'air de l'environnement intérieur du bâtiment, un capteur de composés organiques volatils (8) configuré pour détecter une valeur instantanée de composés organiques volatils dans l'air de l'environnement intérieur du bâtiment, une unité de contrôle (5) en communication de signal avec le capteur de dioxyde de carbone (2) et avec le capteur de composés organiques volatils (8), une unité de communication (4) pour établir une communication de

signal entre le capteur de dioxyde de carbone (2) et le capteur de composés organiques volatils (8) d'une part et l'unité de contrôle (5) d'autre part, une unité de stockage (6) en communication de signal avec l'unité de contrôle (5), le procédé comprenant les étapes consistant à :

- stocker des valeurs de contrôle de la concentration en dioxyde de carbone et/ou en composés organiques volatils dans l'unité de stockage (6) ;
- détecter, par le capteur de dioxyde de carbone (2), une valeur instantanée de concentration en dioxyde de carbone et l'envoyer à l'unité de contrôle (5),
- détecter par le capteur de composés organiques volatils (8) une valeur instantanée de concentration en composés organiques volatils et l'envoyer à l'unité de contrôle (5) ;
- traiter, par l'unité de contrôle (5), les valeurs de contrôle et les valeurs instantanées de concentration en dioxyde de carbone et en composés organiques volatils pour générer un signal de sortie représentatif de la qualité de l'air détectée par les capteurs (2, 8) ;
- envoyer le signal de sortie à une unité d'avertissement visuel et/ou acoustique (7). **caractérisé en ce qu'**il comprend les étapes supplémentaires consistant à :
- définir un intervalle de temps maximal de purification de l'air correspondant à la durée maximale d'une étape de ventilation de l'environnement ;

- définir un premier seuil critique pour la concentration en composés organiques volatils ;

- définir un second seuil critique pour la concentration en composés organiques volatils dont la valeur est supérieure au premier seuil critique ;

- déterminer, lorsque la détection des composés organiques volatils est effectuée, si le temps écoulé depuis la dernière ventilation de l'environnement est supérieur à l'intervalle maximal de temps de purification de l'air et si la concentration en composés organiques volatils est supérieure au premier seuil critique, et lorsque cela est déterminé, envoyer un signal de sortie indiquant la nécessité d'effectuer une ventilation de l'environnement.

2.  Procédé selon la revendication précédente, **caractérisé en ce que** lorsque la détection de composés organiques volatils est effectuée, si le givre qui s'est écoulé depuis la dernière ventilation de l'environnement est inférieur à l'intervalle maximal de givre de purification de l'air et que la concentration en composés organiques volatils est supérieure au second seuil critique, un signal de sortie est envoyé, indiquant la nécessité d'effectuer une ventilation de l'environnement.

3.  Procédé selon l'une quelconque des revendications précédentes, **caractérisé en ce que** l'étape de détection d'une valeur instantanée de concentration en composés organiques volatils est effectuée lorsque la concentration en dioxyde de carbone est supérieure à une valeur d'activation de concentration en dioxyde de carbone.

4.  Procédé selon l'une quelconque des revendications précédentes, **caractérisé en ce que** l'étape de détection d'une valeur instantanée de concentration en composés organiques volatils n'est pas effectuée lorsque la concentration en dioxyde de carbone est inférieure à une valeur d'activation de concentration en dioxyde de carbone.

5.  Procédé selon l'une quelconque des revendications précédentes, **caractérisé en ce que** l'étape de stockage des valeurs de contrôle de la concentration en dioxyde de carbone et/ou en composés organiques volatils dans l'unité de stockage (6) comprend les étapes consistant à :

    - stocker dans l'unité de stockage (6) ladite valeur d'activation de la concentration en dioxyde de carbone ;
    - stocker dans l'unité de stockage (6) une valeur critique de concentration en dioxyde de carbone ; ladite valeur critique de concentration en dioxyde de carbone étant supérieure à ladite valeur d'activation de dioxyde de carbone ;
    - stocker dans l'unité de stockage (6) une valeur acceptable de concentration en dioxyde de carbone, ladite valeur acceptable de concentration étant inférieure à la valeur critique de concentration en dioxyde de carbone et supérieure à la valeur d'activation de concentration en dioxyde de carbone.

6.  Procédé selon la revendication précédente, **caractérisé en ce que** l'étape de traitement comprend l'étape consistant à comparer la valeur instantanée de la concentration en dioxyde de carbone avec la valeur d'activation de la concentration en dioxyde de carbone, avec la valeur critique de la concentration en dioxyde de carbone et avec la valeur acceptable de la concentration en dioxyde de carbone ; dans lequel

    - le signal de sortie est représentatif d'une première alerte tant que la valeur instantanée de la concentration en dioxyde de carbone est inférieure à la valeur d'activation de la concentration en dioxyde de carbone ;
    - le signal de sortie est représentatif d'une deuxième alerte tant que la valeur instantanée de la valeur de concentration en dioxyde de carbone est supérieure à la valeur d'activation de la concentration en dioxyde de carbone et est inférieure à la valeur critique de la concentration en dioxyde de carbone ;
    - le signal de sortie est représentatif d'une troisième alerte tant que la valeur instantanée de la concentration en dioxyde de carbone est supérieure à la valeur critique de la concentration en dioxyde de carbone et que ladite valeur instantanée de la concentration en dioxyde de carbone reste constante ou augmente avec le temps ;
    - le signal de sortie est représentatif d'une quatrième alerte une fois que la valeur instantanée de la concentration en dioxyde de carbone a dépassé la valeur critique de la concentration en dioxyde de carbone et tant que la valeur instantanée de la concentration en dioxyde de carbone diminue avec le temps et est supérieure à la valeur acceptable de la concentration en dioxyde de carbone.

7.  Procédé selon la revendication précédente, **caractérisé en ce que** le système comprend en outre un capteur de température (1) configuré pour détecter une valeur instantanée de la température de l'air dans l'environnement intérieur, ledit capteur de température (1) étant en communication de signal avec l'unité de contrôle (5) par l'intermédiaire de l'unité de communication (4), ledit procédé comprenant les étapes supplémentaires consistant à :

    - détecter, par le capteur de température (1), une valeur instantanée de la température de l'air dans l'environnement intérieur et envoyer, par l'unité de communication (4), ladite valeur instantanée de la température à l'unité de contrôle (5) ;
    - définir, par l'unité de contrôle, un intervalle de temps de rafraîchissement comprenant une pluralité de points temporels ;
- stocker dans l'unité de stockage (6), par l'unité de contrôle (5), une valeur instantanée de température pour chaque point temporel de l'intervalle de temps de rafraîchissement pour définir un ensemble de valeurs instantanées de température ;
- stocker dans l'unité de stockage (6), par l'unité de contrôle, une valeur instantanée de la concentration en dioxyde de carbone pour chaque point temporel de l'intervalle de temps de rafraîchissement pour définir un ensemble de valeurs instantanées de concentration en dioxyde de carbone.

8. Procédé selon la revendication précédente, **caractérisé en ce qu'**il comprend l'étape supplémentaire consistant à :

- définir, par l'unité de contrôle (5), une valeur de référence de température ;
- analyser, par l'unité de contrôle (5), l'ensemble des valeurs instantanées de température pour déterminer une valeur maximale de température à partir desdites valeurs instantanées de température ;
- analyser, par l'unité de contrôle (5), l'ensemble des valeurs instantanées de température pour déterminer un taux de diminution de la température ;
- définir, par l'unité de contrôle (5), ledit intervalle de temps maximal de purification de l'air en fonction de la valeur maximale de la température, de la valeur de référence de la température et de la vitesse de diminution de la température ;

et l'étape de traitement comprend les sous-étapes consistant à :

- définir, par l'unité de contrôle (5), un intervalle de temps critique correspondant à la période de temps dans laquelle le signal de sortie est représentatif de la quatrième alerte ;
- comparer, par l'unité de contrôle (5), l'intervalle de temps critique avec l'intervalle de temps de purification de l'air maximal ;
- régler le signal de sortie sur la deuxième alerte si l'intervalle de temps critique dépasse l'intervalle de temps maximal de purification de l'air.

9. Procédé selon l'une quelconque des revendications précédentes, **caractérisé en ce que** l'étape d'envoi d'un signal de sortie comprend la sous-étape d'envoi du signal de sortie de l'unité de contrôle (5) à une source de lumière, les première, deuxième, troisième et quatrième alertes correspondant à une première, une deuxième, une troisième et une quatrième couleurs et/ou intensités de lumière qui peuvent être émises à partir de la source de lumière respectivement.

10. Procédé selon l'une quelconque des revendications précédentes, dans lequel l'étape d'envoi d'un signal de sortie comprend la sous-étape d'envoi du signal de sortie de l'unité de contrôle (5) à une source sonore, les première, deuxième, troisième et quatrième alertes correspondant à une première, une deuxième, une troisième et une quatrième tonalités et/ou intensités sonores et/ou à un premier et/ou un deuxième et/ou un troisième et/ou un quatrième message vocal.

11. Système (10) configuré pour mettre en oeuvre le procédé selon l'une quelconque des revendications précédentes, ledit système (10) comprenant :

- un capteur de température a(1) configuré pour détecter une valeur instantanée de la température de l'air dans l'environnement intérieur du bâtiment ;
- un capteur de dioxyde de carbone (2) configuré pour détecter une valeur instantanée de concentration en dioxyde de carbone de l'air dans l'environnement intérieur du bâtiment ;
- un capteur de composés organiques volatils (8) configuré pour détecter une valeur instantanée de concentration en composés organiques volatils dans l'air dans l'environnement intérieur du bâtiment ;
- une unité de contrôle (5) en communication de signal avec le capteur de température (1) et avec le capteur de dioxyde de carbone (2) ;
- une unité de communication (4) pour établir une communication de signal entre les capteurs de température, de dioxyde de carbone et de composés organiques volatils d'une part et l'unité de contrôle (5) d'autre part, ladite unité de communication (4) étant configurée pour envoyer des valeurs instantanées de température, de dioxyde de carbone et de composés organiques volatils à l'unité de contrôle (5) ;
- une unité de stockage (6) en communication de signal avec l'unité de contrôle (5) et configurée pour stocker les valeurs de contrôle de la concentration en dioxyde de carbone et en composés organiques volatils ;

dans lequel l'unité de contrôle (5) est configurée pour traiter les valeurs de contrôle et les valeurs instantanées de concentration en dioxyde de carbone et en composés organiques volatils pour générer un signal de sortie représentatif de la qualité de l'air détectée par les capteurs (2, 8) et pour envoyer le signal de sortie à une unité d'avertissement visuel et/ou acoustique (7).

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110925946

- EP 3855087 A